# EUROPEAN PATENT SPECIFICATION

(11) **EP 3 900 282 B1**
(45) Date of publication and mention of the grant of the patent: **03.04.2024**
(21) Application number: 18943896.3
(22) Date of filing: 17.12.2018
(51) Int. Cl.: H04W 88/08, H04L 43/0852, H04L 43/0876, H04L 47/263, H04L 47/30, H04L 47/26, H04L 43/16, H04W 28/02, H04L 47/32

(54) **METHOD AND APPARATUS FOR PACKET DELAY MANAGEMENT IN ECPRI NETWORK**
VERFAHREN UND VORRICHTUNG ZUR PAKETVERZÖGERUNGSVERWALTUNG IN EINEM ECPRI-NETZWERK
PROCÉDÉ ET APPAREIL DE GESTION DE RETARD DE PAQUETS DANS UN RÉSEAU ECPRI

(43) Date of publication of application: 27.10.2021
(73) Proprietor: Telefonaktiebolaget LM Ericsson (publ), 164 83 Stockholm (SE)
(72) Inventor: ZHANG, Junlun, Nanjing, Jiangsu 211100 (CN)
(74) Representative: Ericsson
(86) International application number: PCT/CN2018/121406
(87) International publication number: WO 2020/124303

(56) References cited:
- WO-A1-2018/113907
- AHMED NASRALLAH ET AL: "Ultra-Low Latency (ULL) Networks: A Comprehensive Survey Covering the IEEE TSN Standard and Related ULL Research", ARXIV.ORG, CORNELL UNIVERSITY LIBRARY, 201 OLIN LIBRARY CORNELL UNIVERSITY ITHACA, NY 14853, 20 March 2018 (2018-03-20), XP080861399,
- Anonymous: "IEEE std 802.1Qbb-2011 - Media Access Control (MAC) Bridges and Virtual Bridged Local Area Network - Amendment 17: Priority-based Flow Control", IEEE Xplore, 30 September 2011 (2011-09-30), pages 1-40, XP055862573, 3 Park Avenue, New York, NY 10016-5997, USA Retrieved from the Internet: URL:https://https://ieeexplore.ieee.org/st amp/stamp.jsp?tp=&arnumber=6032693 [retrieved on 2021-11-17]

## Description

### Technical Field

The present invention relates to communications networks, in general, and in particular to a method and an apparatus for managing transport of packets in applications having strong requirements on latency.

### Background

Elements of the 5^{th} generation (5G) Radio Access Network (RAN) based on C-RAN (Cloud RAN) have strong requirements on latency and jitter for their interconnection. At current state of the art, C-RAN uses CPRI (Common Public Radio Interface) that is a TDM-like signal (TDM = Time Division Multiplexing) that can be carried over optical wavelength-division multiplexing (WDM) network with or without prior TDM aggregation. CPRI, however, is not efficient from a bandwidth perspective. To meet the needs for 5G, a new industry standard for 5G fronthaul, eCPRI, has been developed and it will improve bandwidth efficiency, increase capacity and lower latency. eCPRI is an Ethernet packet-based technology.

eCPRI specified in version 1.1 has the same stringent requirements on latency as the earlier CPRI technology, which means it requires switches capable of ensuring latency reduction. Designing networks with low latency and minimal jitter is very complex, it may require expensive components and eventually it is dimensioned for a worst-case scenario.

Even then, however, there may be situations when a sending station may be transmitting data faster than the other end of the link can accept it because buffers have limited capacity. In these situations, the node receiving such an excessive traffic may initiate a MAC flow control which stops the whole physical link or specific priority logical tunnel. This operation introduces delays that were not considered in controlling timing of the transmission and reception operations between eREC and eRE nodes. In consequence the timing strictly defined in 3GPP specifications for data in uplink and downlink is not met and data may be dropped and lost.

WO2018113907A1 discloses monitoring a fill level and a fill rate of a buffer used for CPRI communication.

The paper "Ultra-Low Latency (ULL) Networks: A Comprehensive Survey Covering the IEEE TSN Standard and Related ULL Research" by Ahmed Nasrallah et al., 2018-03-20, XP080861399, is a survey on mechanisms to handle ultra-low latency (URLLC), including CPRI and eCPRI enhancements and developments and MAC Prioirty-based Flow control.

### Summary

It is the object of the present invention to obviate at least some of the above disadvantages and provide an improved method and apparatus for management of packet delay in eCPRI network.

The present invention is defined by the independent claims.

The dependent claims define particular embodiments of the invention.

The present invention provides the benefit coordinating flow control at the transport interface with that at the eCPRI interface, which prevents packets being dropped.

### Brief description of the drawings

The present invention will be understood and appreciated more fully from the following detailed description taken in conjunction with the drawings in which:
FIG. 1 is a flowchart illustrating a method for data packet delay management performed at a receiver node in a communications network in one embodiment of the present invention;
FIG. 2 illustrates mapping of an eCPRI message onto a transport network layer payload according to eCPRI specification v 1.1;
FIG. 3 illustrates representation of a priority enable vector and time vector in one embodiment of the present invention;
Fig. 4 is a flowchart illustrating a method for data packet delay management in a communications network in an alternative embodiment of the present invention;
Fig. 5 is a diagram illustrating a communications network connecting a sender node to a receiver node over an eCPRI interface according to eCPRI specification v 1.1;
FIG. 6 is a flowchart illustrating a method for data packet delay management performed at a sender node in a communications network in one embodiment of the present invention;
Fig. 7 and Fig. 8 illustrate timing of operations performed in embodiments of the method for data packet delay management performed at receiver and sender nodes in a communications network;
Fig. 9 is a diagram illustrating a receiver node in one embodiment of the present invention;
Fig. 10 is a diagram illustrating a sender node in one embodiment of the present invention;
Fig. 11 is a diagram illustrating a receiver node in an alternative embodiment of the present invention;
Fig. 12 is a diagram illustrating a sender node in an alternative embodiment of the present invention.

### Detailed description

In the following description, for purposes of explanation and not limitation, specific details are set forth such as particular architectures, interfaces, techniques, etc. in order to provide a thorough understanding of the invention. However, it will be apparent to those skilled in the art that the invention may be practiced in other embodiments that depart from these specific details. In other instances, detailed descriptions of well-known devices, circuits, and methods are omitted so as not to obscure the description of the invention with unnecessary details.

Reference throughout the specification to "one embodiment" or "an embodiment" means that a particular feature, structure, or characteristic described in connection with an embodiment is included in at least one embodiment of the present invention. Thus, the appearance of the phrases "in one embodiment" or "in an embodiment" in various places throughout the specification are not necessarily all referring to the same embodiment. Further, the particular features, structures or characteristics may be combined in any suitable manner in one or more embodiments.

eCPRI defines a protocol layer which provides various mainly User Plane data specific services to the upper layers of the protocol stack. eCPRI allows for efficient and flexible radio data transmission via a packet based fronthaul transport network like IP or Ethernet. The inventor realised that the precise timing of transmission and reception of eCPRI packets in Ethernet frames or IP packets will no longer be observed when a node receiving data initiates a MAC flow control mechanism.

There are several flow control mechanisms known in the art and some will be briefly described here.

One known mechanism of flow control used in computer data links, e.g. RS-232 is known as XON/XOFF method. It uses special codes, transmitted in-band, over the primary communications channel. These codes are called XOFF and XON (from "transmit off" and "transmit on", respectively). XOFF pauses transmission of data from a transmitter to a receive that sent the XOFF code. XON resumes the transmission of data. A trigger for sending XOFF code may be defined by buffer level increasing to an upper threshold and a trigger for sending XON code may be defined by buffer level dropping to a lower threshold.

Another MAC flow control mechanism is PAUSE specified in IEEE 802.3x. In this mechanism a MAC control frame, known as IEEE 802.3x PAUSE frame is transmitted by a node receiving traffic to a node sending the traffic when buffer level at the node receiving traffic reaches a predefined threshold. IEEE 802.3x PAUSE frame specifies the length of time for which the node receiving the IEEE 802.3x PAUSE frame is requested to inhibit transmission of data frames (pause time). After receiving the IEEE 802.3x PAUSE frame the node starts a timer with a value as specified in the IEEE 802.3x PAUSE frame and stops transmission of data frames. Transmission of data frames resumes when the timer expires.

A subsequent IEEE 802.3x PAUSE frame received before expiry of the timer of the preceding IEEE 802.3x PAUSE frame takes priority and re-sets the timer value to the one specified by the subsequent IEEE 802.3x PAUSE frame. A pause time of zero carried in an IEEE 802.3x PAUSE frame have a special meaning as it instructs the node receiving it to resume transmission. Hence, an IEEE 802.3x PAUSE frame with pause time greater than zero functions like the XOFF code whereas IEEE 802.3x PAUSE frame with pause time equal zero functions like the XON code described earlier.

Yet another mechanism of MAC flow control is known as priority-based flow control, or PFC. In this method a MAC control frame known as a PAUSE, which for clarity will be called PFC-PAUSE in this document, frame is sent when buffer level reaches a threshold. Because this this method is based on priority it means that the traffic transmitted and received on such a controlled link is divided into plurality of logical channels, each channel having different priority. This allows for controlling the buffer level (and the overall data flow control) by treating separately each of the different logical channels (priorities). It may be, for example, that the PFC-PAUSE frame inhibits transmission of only the lowest priority traffic, while keeping the remaining logical channels operations. It may also be that the PFC-PAUSE frame leaves intact only the flow of the logical channel with the highest priority while inhibiting remaining logical channels. Many other scenarios can be envisaged considering that the standard which specifies the PFC, i.e. IEEE 802.1Qbb Priority-based Flow Control, specifies 8 priority levels. In PFC the receiver node sending the PFC-PAUSE frame specifies the length of time the traffic shall be paused for various priorities.

Although MAC flow control mechanism can pause transmission of data frames from a sender node to a receiver node when the data frames carry eCPRI traffic this flow the instruction to pause transmission is known the Ethernet, but there is a delay caused by processing of the information before the instruction is received by the eCPRI interface. This means that when the Ethernet interface pauses transmission the eCPRI interface still encapsulates eCPRI packets into Ethernet frames, or other transport network layer frames as specified in the eCPRI standard, until the instruction to pause is received at eCPRI layer. These eCPRI packets encapsulated after pausing the Ethernet and before pausing eCPRI will be dropped.

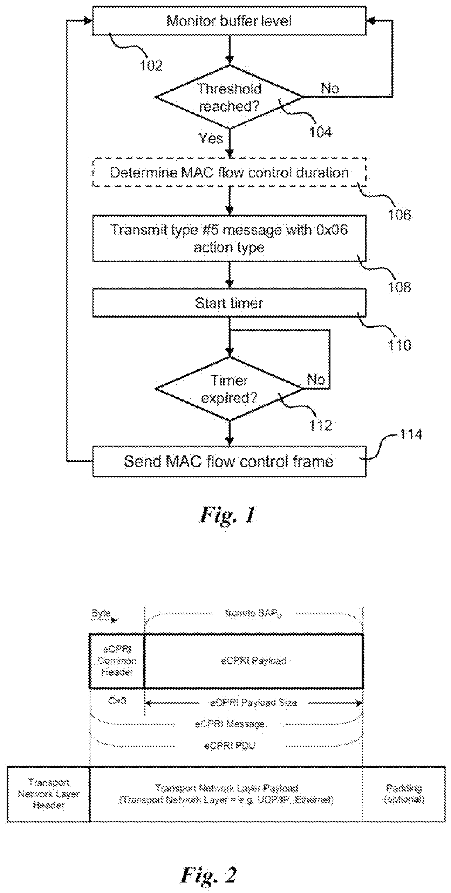

Figure 2 illustrates one example in which one eCPRI message is mapped onto a transport network layer payload. As shown in Figure 2 the eCPRI message may be carried in an Ethernet frame and if the Ethernet interface is paused before pausing the eCPRI interface there will be no carrier for transporting the eCPRI messages.

The embodiments of the present invention are described with reference to Ethernet being the transport interface for delivering eCPRI messages between the network nodes. However, as would be known to a person skilled in the art the eCPRI messages may be also carried in other transport interface payload (e.g. UDP/IP).

Because the MAC flow control mechanism sends from the receiver node 504 to the sender node 502 message that cause pausing transmission over the transport network and the eCPRI interface is not aware of this pause the inventor realise that there is a need for a eCPRI mechanism to control the eCPRI traffic. This new mechanism must also co-ordinate eCPRI and its transport interface to manage delay.

A flow chart illustrating an embodiment of a method for data packet delay management in a communications network connecting a sender node 502 over an eCPRI interface to a receiver node 504 in accordance with the present invention is presented in Figure 1. The method, in the embodiment illustrated in Figure 1 is performed at the receiver node 504 (i.e. the node receiving eCPRI traffic). The method comprises a step of monitoring a buffer level, 102, at a buffer receiving data from the sender node 502. When the sender node 502 sends data faster that the receiver node 504 can process these data the buffer level at the receiver node 504 increases and this may result in buffer overflow if not handled early enough. Therefore, there is a threshold defined for the buffer which is defined below the full capacity of the buffer. This allows for some safety margin in case the flow control mechanism is delayed - packets received after crossing the threshold will still be processed and not dropped before the flow control starts. The value of the threshold is implementation specific.

When the buffer level reaches the threshold, 104-Yes, the method further comprises transmitting, 108, to the sender node 502 over the eCPRI interface at least one message comprising information indicative of length of time of a Medium Access Control, MAC, flow control and then, after a delay, 110, 112, transmitting 114 at least one MAC flow control frame to the sender node 502.

In the description below, for reasons of clarity and brevity, a reference to PFC-PAUSE frame also covers the PAUSE frame defined in IEEE 802.3x unless stated otherwise.

### Delay

As explained above there are two types of messages that are sent to the sender node 502 with the objective of stopping the traffic:
- At least one message transmitted over eCPRI interface and comprising information indicative of length of time of a Medium Access Control, MAC, flow control. In embodiments when the information indicative of length of time of the MAC flow control explicitly gives this length of time there is only one such message. In alternative embodiments two eCPRI messages are used and the first one starts the pause period whereas the second stops the pause period (causes the eCPRI traffic to resume).
- A MAC flow control message PFC-PAUSE or at least one MAC flow control message PAUSE (including the embodiment in which the PAUSE operates similarly to the XOFF/XON technique described earlier).

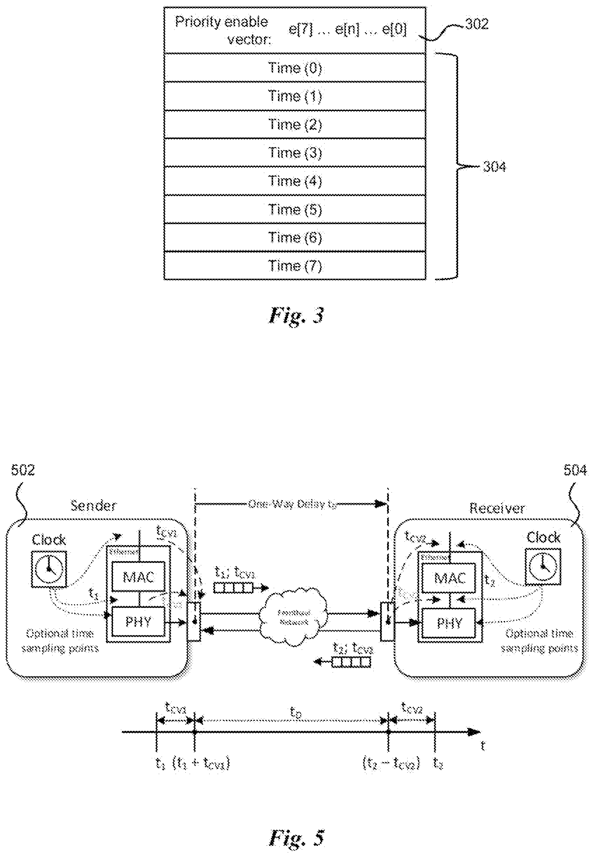

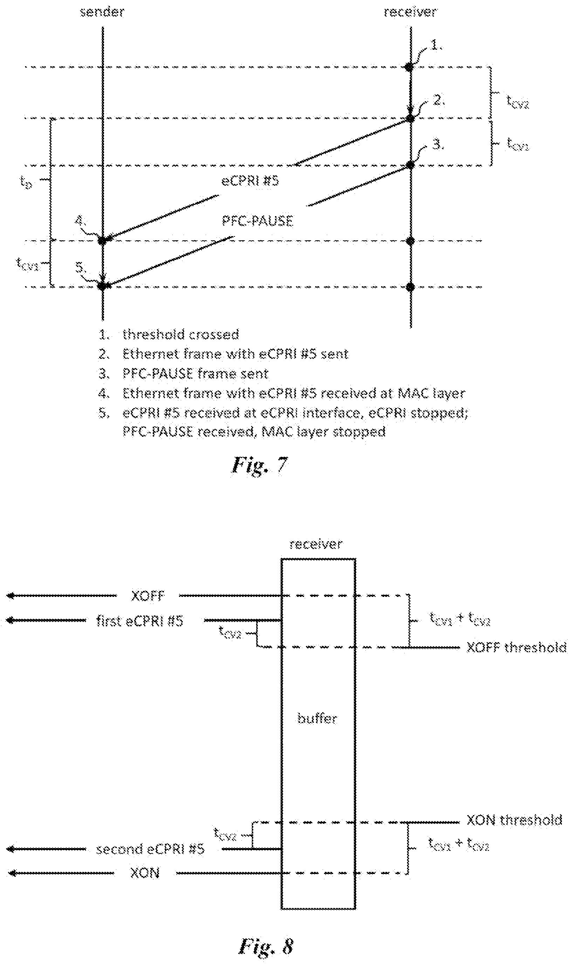

The message transmitted over eCPRI interface needs to be processed at both peer nodes (the receiver node 504, which transmits this message and the sender node 502, which receives this message). This is illustrated in Figures 5 and 7. It takes t_{CV1} to process the eCPRI message at the sender node 502 and t_{CV2} at the received node. The values t_{CV1} and t_{CV2} may be described as time required at a sender node (or a receiver node for t_{CV2}) from detecting a trigger to send a packet over the eCPRI interface until transmission of the packet over the eCPRI interface. The eCPRI specification in version 1.1 refers to t_{CV1} and t_{CV2} as compensation values.

It takes (timewise) t_{D} for the eCPRI message to travel between the peer ports. This means that from the threshold crossing at the receiver, which triggers the sending of the eCPRI message comprising information indicative of length of time of MAC flow control to stopping of eCPRI at the sender node 502 it takes t_{CV2} + t_{D} + t_{CV1}.

PFC-PAUSE frame is a MAC control message which do not suffer processing delays in the nodes and the t_{CV1} and t_{CV2} delays do not apply to PFC-PAUSE. This means that from a trigger to send PFC-PAUSE from the receiver node, 504, to the MAC pausing transmission at the sender node, 502, it takes only t_{D}. The same considerations are applicable to the PAUSE frame defined in IEEE 802.3x.

This means that if the two messages (i.e. the eCPRI message comprising information indicative of length of time of MAC flow control and PFC-PAUSE) are sent at the same time the PFC-PAUSE message will arrive t_{CV2} + t_{CV1} before the eCPRI message. This, in turn, means there would be eCPRI packets for which there would be no transport available. Therefore, by delaying the PFC-PAUSE message, preferably by t_{CV2} + t_{CV1}, relative to the trigger for the eCPRI message (i.e. when the buffer level increases and reaches the threshold) both interfaces (i.e. eCPRI and Ethernet) will be paused at the same time and no eCPRI traffic will be dropped. This is illustrated in Figure 7. The internal operations at the receiver and sender nodes resulting in compensation values t_{CV2} and t_{CV1} are illustrated by arrows between points 1 and 2 as well as 4 and 5. The transfer time t_{D} for the eCPRI message and the PFC-PAUSE is the same because in both cases it is an Ethernet frame (or another transport layer frame in an alternative embodiment). Similar considerations are applicable to embodiments with MAC flow control using a PAUSE frame defined in IEEE 802.3x.

In one alternative embodiment it may be assumed that t_{CV2} > t_{CV1}. This is because the receiver node 504, after the buffer level reaches the threshold, needs to generate and transmit in a co-ordinated succession two messages (eCPRI and PFC-PAUSE) and in some embodiments also determine the pause duration, whereas the sender node 502 only receives these messages when they arrive. This assumption enables an embodiment of the described method in which the PFC-PAUSE is delayed by 2t_{CV2}. This embodiment has the advantage that the receiver node, 504, knows its t_{CV2} value and does not need to obtain the t_{CV1} value from the sender node, 502.

It is worth to note that using 2t_{CV2} as the delay is also possible because both the sender node, 502, and the receiver node, 504, have buffers where data is kept before sending (at the sender node) and after receiving (at the receiver node). These buffers allow for some misalignment of the beginning and end of the pause period between the transport interface and the eCPRI interface. Size of a buffer, which determines how big the misalignment may be, is implementation specific.

When the present invention is implemented in an embodiment in which t_{CV1} and t_{CV2} are used the t_{CV1} value may be delivered by the sender node 502 to the receiver node 504 in one of known eCPRI messages. For example, t_{CV1} may be delivered in eCPRI message type #5 *One-Way Delay Measurement* carrying an action types 0x00 or 0x05 as described in eCPRI specification, version 1.1. In alternative embodiment t_{CV1} value may be delivered in a different message, for example one of type #64 to type #255 *Vendor Specific* messages may be used.

In a preferred embodiment the MAC flow control may be a priority-based flow control, PFC, described earlier. In this embodiment, in the operation of transmitting, 108, over the eCPRI interface the receiver node, 504, transmits one message comprising information indicative of length of time of the MAC flow control for at least one priority. Said message comprises a value indicative of a period of pause time requested for said at least one priority. The operation of transmitting, 114, the at least one MAC flow control frame comprises sending a PFC-PAUSE frame. As explained earlier the MAC flow control using PFC-PAUSE frame is described in IEEE 802.1Qbb and it specifies 8 priority levels. This allows operating MAC flow control on all or only on some priority levels while allowing traffic on remaining priority levels to continue. The advantage of this is clear - it may be that inhibiting traffic of the lowest priority only is enough to prevent buffer overflow. If this pausing just one is not enough traffic on more priority levels may be paused still trying to avoid pausing the highest priority level. Of course, pausing all priority levels is also possible.

When priority-based flow control, PFC, is implemented at the transport interface the present embodiment implements corresponding control (i.e. pausing) for the eCPRI interface. Therefore, once the buffer threshold at the receiver node, 504, is reached, 104-Yes, the method determines the MAC flow control duration for the various priority levels, 106. The MAC flow control duration (e.g. priority enable vector and time vector for PFC-PAUSE mechanism) may be determined using one of method known in the art. The priority enable vector and time vector determined for the MAC flow control may be used for pausing the transport interface and the eCPRI interface at the sender node, 502. First, once the MAC flow control duration is determined (e.g. the two vectors for the PFC-PAUSE mechanism), the receiver node, 504, transmits, 108, to the sender node 502 over the eCPRI interface one message comprising the information indicative of pause duration for the various priority levels determined in step 106 and then, after a delay, the receiver node, 504, transmits 114 a PFC-PAUSE frame comprising the same information indicative pause duration for the various priority levels determined in step 106. The PFC-PAUSE frame is sent to the sender node, 502.

The information indicative of length of time of the MAC flow control in the embodiment in which the MAC flow control is the PFC described earlier may comprise a priority enable vector, 302, for indicating if MAC flow control should be enabled at specific priority levels of the plurality of priority levels and a plurality of time values, 304, corresponding to the plurality of priority levels as shown in Figure 3. A combination of the priority enable vector, 302, value for a specific priority level and a corresponding time value, 304, for the same priority level indicates if and for how long MAC flow control will be enabled at this specific priority level. This is an information structure similar to that used in the PFC-PAUSE frame. Priority enable vector, 302, acts like a switch indicating if eCPRI traffic should be paused at specific priority level. For example, e[7] = 0 indicates that eCPRI traffic at priority level 7 shall not be paused, whereas e[4] = 1 indicates that eCPRI traffic at priority level 4 shall not be paused. The duration of the pause is encoded in the time vector 304 in the value corresponding to priority level 4, i.e. Time (4). In this way pause durations for all eight priority levels can be indicated. Each Time(n) field can assume a value in the range of 0 to 65535 pause quanta.

In alternative embodiments the same indication of pause durations for eCPRI traffic for all eight priority levels can be indicated in a different way. For example a message comprising Time(7)=1000, Time(6)=1000 and Time(5)=500, indicates pause duration for eCPRI for priorities 7, 6 and 5 and because none of priorities 0 to 4 is indicated these priorities are not subject to flow control.

In an alternative embodiment the MAC flow control may be implemented in accordance with IEEE 802.3x and the method also comprises determining length of time of the MAC flow control, 106. In this embodiment the operation of transmitting, 108, over the eCPRI interface comprises transmitting one said message comprising information indicative of length of time of the MAC flow control and the operation of transmitting, 114, the at least one MAC flow control frame comprises sending a PAUSE frame. In this embodiment transport and eCPRI interface are paused at all priority levels.

An alternative embodiment of the method of this invention is based on a variant of the IEEE 802.3x MAC flow control and the specific use of the PAUSE frame described earlier which is based on the known XOFF/XON flow control.

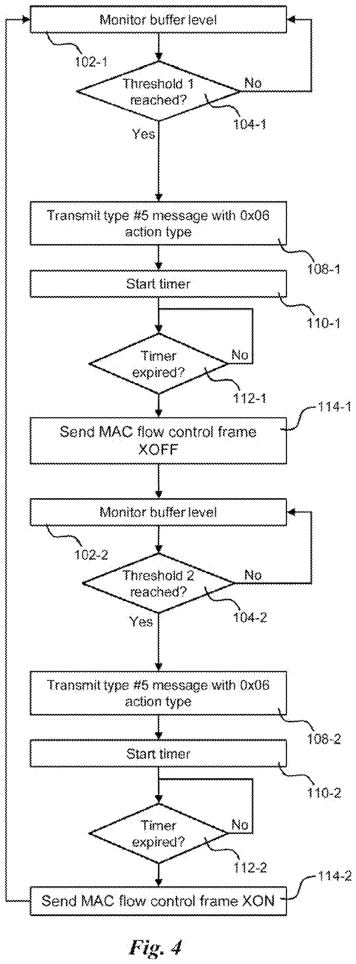

This embodiment is illustrated in Figure 4. When the MAC flow control is the XOFF/XON flow control described earlier, the operation of transmitting, 108, comprises transmitting, 108-1, over the eCPRI interface a first message comprising information indicative of length of time of the MAC flow control in response to the buffer level increasing and reaching a XOFF threshold in step 104-1. After this first message is sent the method comprises transmitting, 114-1, a XOFF frame. The XOFF message is sent with a delay which is determined in the same way as discussed earlier. This results in pausing the transport interface and the eCPRI interface at the same time. In this embodiment the pause duration is not determined after crossing the threshold in step 106 and this is why the step 106 in Figure 1 is optional and shown in Figure 1 in dashed line and not present at all in Figure 4. In the following step of this embodiment the method comprises transmitting, 108-2, over the eCPRI interface a second message comprising information indicative of length of time of the MAC flow control in response to the buffer level dropping to a XON threshold in step 104-2, this second message instructs the eCPRI interface to resume operation. After this second message is sent the method comprises transmitting, 114-2, a XON frame. The XON frame is sent with a delay which is determined in the same way as discussed earlier. This results in resuming the transport interface and the eCPRI interface at the same time.

This embodiment is also illustrated in Figure 8 which shows that the first eCPRI message and the XOFF message are sent in response to the buffer level increasing to a XOFF threshold and the pause of the transport and eCPRI interfaces is revoked when the buffer level decreases and a XON threshold is reached. There is no need to know the duration of the pause in advance - it is enough to instruct eCPRI and transport interfaces at the sender node 502 when they should pause and when they should resume operation.

Preferably, the information indicative of length of time of the MAC flow control carried in said first message is set to a first value greater than zero, for example 65535 pause quanta, which is the maximum value allowed for the pause duration. Preferably, the information indicative of length of time of the MAC flow control carried in said second message is set to zero. The second message is sent when the buffer level drops to the XON threshold and when the second message is received at the receiver node it interrupts the pause and resumes operation of the eCPRI interface. The same is applicable to the transport interface. The value of 65535 pause quanta is disclosed here, but it would be clear to a person skilled in the art that other values (e.g. 65534) could be used too.

Once it is known that the eCPRI interface at the sender node, 502, needs to be notified about the start and termination of an upcoming MAC flow control a mechanism for delivering this information to the eCPRI interface at the sender node, 502, is necessary. In one embodiment the at least one message comprising information indicative of length of time of the MAC flow control may be an eCPRI message type #5 *One-Way Delay Measurement* described in eCPRI specification, version 1.1. In this embodiment the *One-Way Delay Measurement* message carries an action type 0x06 comprising the information indicative of length of time of the MAC flow control, for example the priority enable vector and time vector. Currently the action type 0x06 in the eCPRI specification v.1.1 is reserved for future use and hence the eCPRI message type *#5 One-Way Delay Measurement* with the action type 0x06 can be used for delivering the information about an upcoming MAC flow control to a peer eCPRI interface. However, in alternative embodiments other standard eCPRI messages that have unassigned action types may be considered and used for delivering this information, for example one of type #64 to type #255 *Vendor Specific* messages may be used or eCPRI message type #7 *Event Notification* may be used. Currently the action type 0x06 in the eCPRI message type #7 is reserved for future use and hence the type #7 *Event Notification* with the action type 0x06 can be used for delivering to a peer eCPRI interface the information about an upcoming MAC flow control.

In one practical implementation of embodiments of this invention, for a downlink direction of transmission of the data packets the receiver node comprises a Radio Equipment, RE, node and for uplink direction of transmission of the data packets the receiver node comprises a Radio Equipment Control, REC, node. The downlink and uplink directions are determined with reference to wireless interface and the well-established naming convention in which downlink is the connection from a base station to user equipment and uplink direction is from the user equipment to the base station.

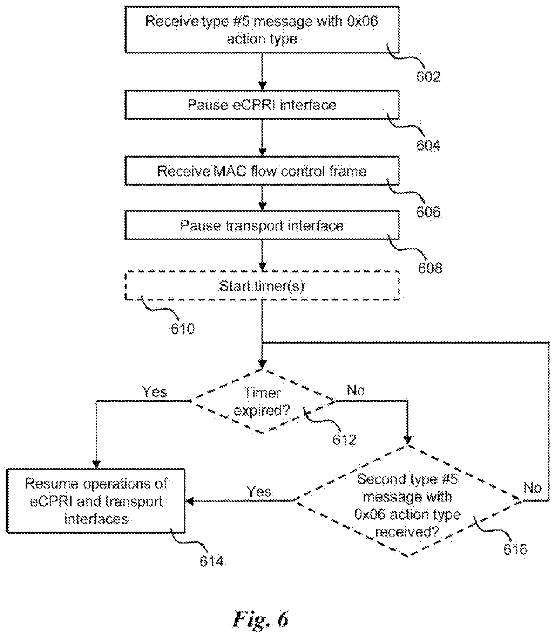

Figure 6 illustrates an embodiment of the invention from the perspective of a sender node, 502. In this embodiment a method for data packet delay management in a communications network connecting the sender node, 502, over an eCPRI interface to a receiver node, 504 is disclosed. The method is performed at the sender node, 502, transmitting data packets to the receiver node, 504. The method comprises receiving, 602, from the receiver node over the eCPRI interface at least one message comprising information indicative of length of time of a MAC flow control. In a preferred embodiment this message may be the standard eCPRI message type #5 *One-Way Delay Measurement* with action type 0x06 comprising the information indicative of length of time of the MAC flow control, for example in the form of a priority enable vector and time vector. The method also comprises receiving, 606, at least one MAC flow control frame from the receiver node, 504 (e.g. a PFC-FRAME).

In response to the receiving of the first one of said at least one message comprising information indicative of length of time of a MAC flow control and receiving of the first one of said at least one MAC flow control frame the method comprises pausing, 604, encapsulation of eCPRI packets and pausing, 608, transmission of traffic over a transport interface to the receiver node, 504.

Because the receiver node, 504, coordinates sending the at least one eCPRI message comprising information indicative of length of time of a MAC flow control with sending the at least one MAC flow control frame by delaying sending the MAC flow control frame as explained earlier, the eCPRI and transport interfaces at the sender node are paused substantially at the same time. The exact timing of pausing of these interfaces depends on the embodiment of the method at the receiver node, 504. If the delay is taken to be t_{CV1} + t_{CV2} the two interfaces are paused at the same time. If the delay is taken to be 2t_{CV2} the pausing of these two interfaces will be somewhat misaligned, but this misalignment will be handled by the buffers as explained earlier and this will prevent dropping of packets. Corresponding considerations are applicable to embodiments in which XOFF and XON PAUSE frames are used as the MAC flow control frames.

When the MAC flow control is a priority-based flow control, PFC, the operation of receiving, 602, the at least one message comprising information indicative of length of time of the MAC flow control comprises receiving over the eCPRI interface one said message comprising information indicative of length of time of the MAC flow control for at least one priority a value indicative of a period of pause time requested for said at least one priority. As discussed earlier, in a preferred embodiment, for a PFC MAC flow control the PFC-PAUSE comprises a priority enable vector and a time vector and the eCPRI message uses this same format of notifying the sender node about the requested pause duration. Therefore, the information indicative of length of time of the MAC flow control comprises carried in the eCPRI message comprises a priority enable vector, 302, for indicating if MAC flow control should be enabled at specific priority levels of a plurality of priority levels and a time vector comprising a plurality of time values, 304. These time values correspond to the plurality of priority levels, wherein a combination of the priority enable vector, 302, value for a specific priority level and a corresponding time value, 304, for the same priority level indicates if and for how long the MAC flow control will be enabled at this specific priority level. The values of the priority enable vector, 302, and the values of the time vector, 304, are the same in the eCPRI message and the PFC-PAUSE message.

In an embodiment in which the MAC flow control is compliant with IEEE 802.3x the eCPRI message received from the receiver node, 504, comprises information indicative of length of time of the MAC flow control which is the same as in the corresponding PAUSE frame received from the receiver node, 504.

An alternative embodiment of the method of this invention is based on the variant of the IEEE 802.3x MAC flow control and the specific use of the PAUSE frame described earlier which is based on the known XOFF/XON flow control. In this embodiment, the operation of receiving, 602, the at least one eCPRI message comprises receiving over the eCPRI interface a first message comprising information indicative of length of time of the MAC flow control set to a first value greater than zero. In response to receiving said first message encapsulation of eCPRI packets is paused. The method also comprises receiving over the eCPRI interface a second message comprising information indicative of length of time of the MAC flow control set to zero. In response to receiving said second message encapsulation of eCPRI packets is resumed. Preferably, the information indicative of length of time of the MAC flow control received in said first message is set to 65535 pause quanta, which is the maximum value allowed for the pause duration.

As illustrated in Figure 6 the sender node, 502, may resume operation at eCPRI and transport interfaces in one of two ways. In the PFC-PAUSE MAC flow control timers are started, 610, for the various priority levels based on the priority enable vector and time vector. Because the PFC-PAUSE operates based on only one eCPRI message indicating the length of MAC flow control the answer in step 616 will be No and the method loops back to checking if the timer expired, 612. This loop will continue to operate until timer for a given priority level expires, 612-Yes and the operation of the eCPRI interface (and also the transport interface) resumes, 614, at this priority level.

The same operations are performed when the MAC flow control is based on IEEE 802.3x PAUSE (not the XOFF/XON variant), but there is no separation for different priority levels.

When the MAC flow control is based on the XOFF/XON variant of the IEEE 802.3x PAUSE a timer may be set, 610, to the value indicated in the first eCPRI message, but the operations of the eCPRI and transport interfaces are resumed when the second eCPRI message is received, 616 - Yes. This second eCPRI message takes priority over the first one and with the information indicative of the length of time of the MAC flow control set to zero causes the eCPRI and transport interfaces to resume their operations.

As shown in Figure 6, the operations of the eCPRI and transport interfaces resumes either at the expiry of the timer, 612-Yes, or at reception of the second eCPRI message, 616-Yes.

It is worth to note that there is possible an embodiment in which receiving the first eCPRI message comprising the information indicative of length of time of the MAC flow control set to 65535 pause quanta acts like a code-word and no timer is set. The method simply waits for receipt of a second eCPRI message carrying the information indicative of length of time of the MAC flow control set to zero, which cases the eCPRI and transport interfaces to resume their operations, 616-Yes.

In practical implementations of the embodiments of this invention it does not matter if the values for the timers are taken from the eCPRI messages or from the PFC-PAUSE or PAUSE messages.

As explained earlier, in description of the embodiments the invention from the perspective of the receiver node, the eCPRI message comprising the information indicative of length of time of the MAC flow control may be an eCPRI message type #5 *One-Way Delay Measurement* carrying an action type 0x06, wherein said action type 0x06 comprises the information indicative of length of time of the MAC flow control.

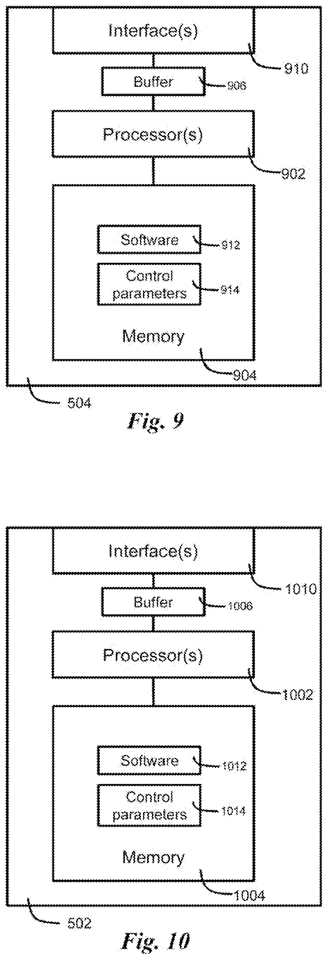

Figure 9 illustrates one embodiment of a receiver node, 504, which implements the method for data packet delay management described earlier. The receiver node, 504, comprises a buffer, 906, and a physical interface, 910, for connecting the receiver node, 504, to a sender node over an eCPRI interface. The receiver node, 504, further comprises a processing circuitry, 902, and a memory, 904. The memory, 904, contains instructions executable by the processing circuitry, 902, such that the receiver node, 504, is operative to monitor a buffer level at a buffer, 906, receiving data from the sender node, 502. When the buffer level reaches a threshold the receiver node is operative to transmit to the sender node over the eCPRI interface at least one message comprising information indicative of length of time of a Medium Access Control, MAC, flow control and send at least one MAC flow control frame to the sender node with a delay.

The receiver node, 504, may include processing circuitry (one or more than processor), 902, coupled to the physical interface(s), 910, and to the memory 904. The receiver node may comprise more than one interface. For example, one interface may the an Ethernet interface for connecting to the sender node and another interface may be provided for the network operator to perform management operations on the receiver node. By way of example, the physical interface(s) 910, the processor(s) 902, and the memory 904 may be connected in series as illustrated in Figure 9. Alternatively, these components 902, 904 and 910 may be coupled to an internal bus system of the receiver node, 504. The memory 904 may include a Read-Only-Memory (ROM), e.g., a flash ROM, a Random Access Memory (RAM), e.g., a Dynamic RAM (DRAM) or Static RAM (SRAM), a mass storage, e.g., a hard disk or solid state disk, or the like. The memory, 904, may include software, 912, and/or control parameters, 914. The memory, 904, may include suitably configured program code to be executed by the processor(s), 902, so as to implement the above-described method as explained in connection with Figures 1-8.

In one embodiment the at least one message comprising information indicative of length of time of the MAC flow control may be an eCPRI message type #5 *One-Way Delay Measurement* described in eCPRI specification, version 1.1. In this embodiment the *One-Way Delay Measurement* message carries an action type 0x06 comprising the information indicative of length of time of the MAC flow control.

In an preferred embodiment the MAC flow control is implemented using the known priority-based flow control, PFC-PAUSE mechanism, described in IEEE 802.1Qbb standard. In this embodiment the information indicative of length of time of a MAC flow control (i.e. pause duration) is delivered using priority enable vector and time vector known from PFC-PAUSE.

In an alternative embodiment the MAC flow control is implemented using the known PAUSE mechanism described in IEEE 802.3x standard. The pause duration is delivered in this embodiment explicitly as a value between 0 to 65535 pause quanta. Priority of different classes of service is not considered in this embodiment.

A variant of the IEEE 802.3x PAUSE mechanism is similar to the well-known XOFF/XON flow control. A first PAUSE frame (corresponding to XOFF) carries a large value defining the pause duration (e.g. the max allowed 65535 pause quanta) and a second PAUSE frame carries a pause time value of zero. The second PAUSE frame (corresponding to XON) overrides the first one if the pause duration imposed by the first PAUSE frame has not expired yet. Pause duration of zero imposed by the second PAUSE frame in effect resumes operation of the transport interface. (And the same happens on the eCPRI interface.)

In one embodiment the delay is equal to t_{CV2} + t_{CV1} and in alternative embodiment the delay is equal to 2t_{CV2}. The delay is measured with reference to the trigger for the eCPRI message. The delay was discussed in detail earlier in this document in description of embodiments of the method.

Figure 10 illustrates one embodiment of a sender node, 502, for use in a communications network. The sender node, 502, comprises a physical interface, 1010, for connecting the sender node, 502, to a receiver node, 504, over an eCPRI interface. The sender node further comprises a processing circuitry, 1002, and a memory, 1004. The memory, 1004, contain, instructions executable by the processing circuitry, 1002, such that the sender node, 502, is operative to receive from the receiver node, 504, over the eCPRI interface at least one message comprising information indicative of length of time of MAC flow control and to pause encapsulation of eCPRI packets in response to receiving a first one of said at least one message comprising information indicative of length of time of a MAC flow control. The sender node, 502, is also operative to receive at least one MAC flow control frame and pause transmission of traffic over a transport interface to the receiver node in response to receiving a first one of said at least one MAC flow control frame.

As described earlier also the sender node, 502, has a buffer, 1006, where data is kept before sending. Using a buffer prevents dropping packets when traffic fluctuates (jitter). Having buffers at both sender, 502, and receiver, 504, nodes allow for some misalignment of the beginning and end of the pause period between the transport interface and the eCPRI interface and in consequence for using at the receiver node, 504, a delay equal to 2t_{CV2} as described earlier.

By way of example, the physical interface(s) 1010, processor(s) 1002, buffer 1006 and memory 1004 may be connected in series as illustrated in Figure 10. Alternatively, these components 1002, 1004, 1006 and 1010 may be coupled to an internal bus system of the sender node, 504. The memory, 904, may include software, 912, and/or control parameters, 914. The memory, 1004, may include suitably configured program code to be executed by the processor(s), 1002, so as to implement the above-described method as explained in connection with Figures 1 - 8. The implementation details discussed in description of the receiver node, 504, are also applicable to the sender node, 502.

It is to be understood that the structures as illustrated in Figures 9 and 10 are merely schematic and that the receiver node, 504, and the sender node, 502, may actually include further components which, for the sake of clarity, have not been illustrated, e.g., further interfaces or processors. Also, it is to be understood that the memory, 904, 1004, may include further program code for implementing other and/or known functionalities.

According to some embodiments, also a computer program may be provided for implementing functionalities of the receiver and sender nodes, 504 and 502, e.g., in the form of a physical medium storing the program code and/or other data to be stored in the memory 904 or 1004, or by making the program code available for download or by streaming.

It is also to be understood that the receiver and sender nodes, 504 and 502, may be provided as virtual nodes. In one embodiment, the receiver and sender nodes, 504 and 502, may be provided in distributed resources, such as in cloud resources. When provided as virtual nodes, it will be appreciated that the memory, 904 and 1004, processing circuitry, 902 and 1002, and physical interface(s), 910 and 1010, may be provided as functional elements. The functional elements may be distributed in a logical network and not necessarily be directly physically connected. It is also to be understood that the receiver and sender nodes, 504 and 502, may be provided as single-node devices, or as a multi-node system.

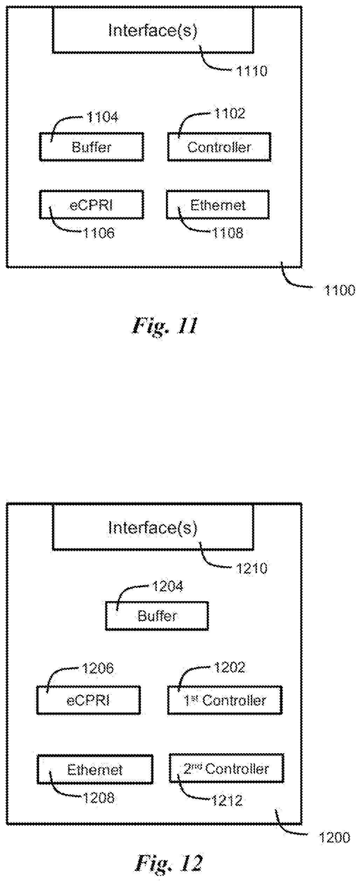

Figure 11 illustrates an alternative embodiment of a receiver node, 1100, for use in packet delay management in a communications network. The receiver node, 1100, comprises a buffer, 1104, and a physical interface, 1110, for connecting the receiver node to a sender node over an eCPRI interface. The receiver node, 1100, also comprises a controller, 1102, for monitoring a buffer level at the buffer, 1104, receiving data from the sender node. The receiver node, 1100, also comprises an eCPRI interface, 1106, for transmitting to the sender node at least one message comprising information indicative of length of time of a Medium Access Control, MAC, flow control in response to the buffer level reaching a threshold and a transport network interface, 1108, for sending at least one MAC flow control frame to the sender node with a delay.

Figure 12 illustrates an alternative embodiment of a sender node, 1200, for use in packet delay management in a communications network. The sender node comprises a physical interface, 1210, for connecting the sender node to a receiver node over an eCPRI interface. The sender node further comprises an eCPRI interface, 1206, for receiving from the receiver node at least one message comprising information indicative of length of time of a Medium Access Control, MAC, flow control and a first controller, 1202, for pausing encapsulation of eCPRI packets in response to receiving a first one of said at least one message comprising information indicative of length of time of a MAC flow control. Further, the sender node also comprises a transport network interface, 1208, for receiving at least one MAC flow control frame and a second controller, 1212, for pausing transmission of traffic over the transport interface to the receiver node in response to receiving a first one of said at least one MAC flow control frame.

As described earlier also the sender node, 1200, comprises a buffer, 1204, where data is kept before sending. Using a buffer prevents dropping packets when traffic fluctuates (e.g. due to jitter). Having buffers at both sender, 1200, and receiver, 1100, nodes allow for some misalignment of the beginning and end of the pause period between the transport interface and the eCPRI interface and in consequence for using at the receiver node, 1100, a delay equal to 2t_{CV2} as described earlier.

The receiver node, 1100, and the sender node, 1200, are operable to implement embodiments of the methods performed at receiver and sender nodes in embodiments described earlier.

The methods of the present disclosure may be implemented in hardware, or as software modules running on one or more processors. The methods may also be carried out according to the instructions of a computer program, and the present disclosure also provides a computer readable medium having stored thereon a program for carrying out any of the methods described herein. A computer program embodying the disclosure may be stored on a computer readable medium, or it could, for example, be in the form of a signal such as a downloadable data signal provided from an Internet website, or it could be in any other form.

It should be noted that the above-mentioned examples illustrate rather than limit the disclosure, and that those skilled in the art will be able to design many alternative embodiments without departing from the scope of the appended claims. The word "comprising" does not exclude the presence of elements or steps other than those listed in a claim, "a" or "an" does not exclude a plurality, and a single processor or other unit may fulfil the functions of several units recited in the claims. Any reference signs in the claims shall not be construed so as to limit their scope.

### Abbreviations

- CPRI: Common Public Radio Interface
- C-RAN: Cloud Radio Access Network
- eRE: eCPRI Radio Equipment
- eREC: eCPRI Radio Equipment Control
- IP: Internet Protocol
- MAC: Medium Access Control
- PFC: Priority-based Flow Control
- RAN: Radio Access Network
- RE: Radio Equipment
- REC: Radio Equipment Control
- TDM: Time Division Multiplexing
- UDP: User Datagram Protocol

## Claims

1. A method for data packet delay management in a communications network connecting a sender node over a Common Public Radio Interface, eCPRI, interface to a receiver node, the method performed at the receiver node receiving data packets from the sender node and comprising the steps of:
- monitoring (102) a buffer level at a buffer receiving data from the sender node;
- when the buffer level reaches a threshold (104) the method further comprises:
∘ transmitting (108) to the sender node over the eCPRI interface at least one message comprising information indicative of length of time of a Medium Access Control, MAC, flow control, thereby indicating a duration encapsulation of eCPRI packets shall be paused at the sender node;
∘ transmitting (114) at least one MAC flow control frame to the sender node with a delay measured from transmitting the at least one message sent over the eCPRI interface, wherein the delay is based on time required at the sender node (502) to process the at least one message sent over the eCPRI interface.

2. The method according to claim 1, wherein if the MAC flow control is a priority-based flow control, PFC, the method comprises determining (106) length of time of the MAC flow control and the operation of transmitting over the eCPRI interface comprises transmitting one said message comprising information indicative of length of time of the MAC flow control for at least one priority, wherein said message comprises a value indicative of a period of pause time requested for said at least one priority and the operation of transmitting the at least one MAC flow control frame comprises transmitting a PFC-PAUSE frame.

3. The method according to claim 1 or claim 2, wherein the information indicative of length of time of the MAC flow control comprises:
- a priority enable vector (302) for indicating if MAC flow control should be enabled at specific priority levels of a plurality of priority levels; and
- a time vector (304) comprising a plurality of time values corresponding to the plurality of priority levels, wherein a combination of the priority enable vector value for a specific priority level and a corresponding time value for the same priority level indicates if and for how long MAC flow control will be enabled at this specific priority level.

4. The method according to any preceding claims, wherein the at least one message comprising information indicative of length of time of the MAC flow control comprises an eCPRI message type #5 *One-Way Delay Measurement* carrying an action type 0x06, wherein said action type 0x06 comprises the information indicative of length of time of the MAC flow control (108, 108-1).

5. A method for data packet delay management in a communications network connecting a sender node over a Common Public Radio Interface, eCPRI, interface to a receiver node, the method performed at the sender node transmitting data packets to the receiver node and comprising the steps of:
- receiving (602) from the receiver node over the eCPRI interface at least one message comprising information indicative of length of time of a Medium Access Control, MAC, flow control, thereby indicating a duration encapsulation of eCPRI packets shall be paused at the sender node;
- pausing (604) encapsulation of eCPRI packets in response to receiving a first one of said at least one message comprising information indicative of length of time of a MAC flow control;
- receiving (606) at least one MAC flow control frame;
- pausing (608) transmission of traffic over a transport interface to the receiver node in response to receiving a first one of said at least one MAC flow control frame.

6. The method according to claim 5, wherein if the MAC flow control is a priority-based flow control, PFC, the operation of receiving the at least one message comprising information indicative of length of time of the MAC flow control comprises receiving over the eCPRI interface one said message comprising information indicative of length of time of the MAC flow control for at least one priority, wherein said message comprises a value indicative of a period of pause time requested for said at least one priority.

7. The method according to claim 5 or claim 6, wherein the information indicative of length of time of the MAC flow control comprises:
- a priority enable vector (302) for indicating if MAC flow control should be enabled at specific priority levels of a plurality of priority levels; and
- a time vector (304) comprising a plurality of time values corresponding to the plurality of priority levels, wherein a combination of the priority enable vector value for a specific priority level and a corresponding time value for the same priority level indicates if and for how long MAC flow control will be enabled at this specific priority level.

8. A receiver node (504) for use in a communications network, the receiver node (504) comprising a buffer (906) and an physical interface (910) for connecting the receiver node (504) to a sender node over a Common Public Radio Interface, eCPRI, interface, the receiver node (504) further comprising a processing circuitry (902) and a memory (904), the memory (904) containing instructions executable by the processing circuitry (902) such that the receiver node (504) is operative to:
- monitor a buffer level at a buffer receiving data from the sender node;
- when the buffer level reaches a threshold the receiver node is operative to:
o transmit to the sender node over the eCPRI interface at least one message comprising information indicative of length of time of a Medium Access Control , MAC, flow control, thereby indicating a duration encapsulation of eCPRI packets shall be paused at the sender node;
∘ transmit at least one MAC flow control frame to the sender node with a delay, measured from transmitting the at least one message sent over the eCPRI interface, wherein the delay is based on time required at the sender node (502) to process the at least one message sent over the eCPRI interface.

9. The receiver node (504) according to claim 8, wherein if the MAC flow control is a priority-based flow control, PFC, the receiver node is operative to determine length of time of the MAC flow control and to transmit over the eCPRI interface one said message comprising information indicative of length of time of the MAC flow control for at least one priority, wherein said message comprises a value indicative of a period of pause time requested for said at least one priority and further operative to transmit a PFC-PAUSE frame.

10. The receiver node (504) according to claim 8, wherein if the MAC flow control is a PAUSE flow control, the receiver node is operative to determine length of time of the MAC flow control and to transmit over the eCPRI interface one said message comprising information indicative of the length of time of the MAC flow control and to transmit at least one PAUSE frame.

11. A sender node (502) for use in a communications network, the sender node (502) comprising a physical interface (1010) for connecting the sender node (502) to a receiver node over a Common Public Radio Interface, eCPRI, interface, the sender node (502) further comprising a processing circuitry (1002) and a memory (1004), the memory (1004) containing instructions executable by the processing circuitry (1002) such that the sender node (502) is operative to:
- receive from the receiver node over the eCPRI interface at least one message comprising information indicative of length of time of a Medium Access Control, MAC, flow control, thereby indicating a duration encapsulation of eCPRI packets shall be paused at the sender node;
- pause encapsulation of eCPRI packets in response to receiving a first one of said at least one message comprising information indicative of length of time of a MAC flow control;
- receive at least one MAC flow control frame;
- pause transmission of traffic over a transport interface to the receiver node in response to receiving a first one of said at least one MAC flow control frame.

12. The sender node (502) according to claim 11, wherein if the MAC flow control is a priority-based flow control, PFC, the sender node is operative to receive over the eCPRI interface one said message comprising information indicative of length of time of the MAC flow control for at least one priority, wherein said message comprises a value indicative of a period of pause time requested for said at least one priority.

13. The sender node (502) according to claim 11 or claim 12, wherein the information indicative of length of time of the MAC flow control comprises:
- a priority enable vector for indicating if MAC flow control should be enabled at specific priority levels of a plurality of priority levels; and
a time vector comprising a plurality of time values corresponding to the plurality of priority levels, wherein a combination of the priority enable vector value for a specific priority level and a corresponding time value for the same priority level indicates if and for how long MAC flow control will be enabled at this specific priority level.

## Patentansprüche

1. Verfahren zur Verwaltung von Datenpaketverzögerung in einem Kommunikationsnetzwerk, das einen Senderknoten über eine Common-Public-Radio-Interface-,eCPRI-, Schnittstelle mit einem Empfängerknoten verbindet, wobei das Verfahren an dem Empfängerknoten, der Datenpakete vom Senderknoten empfängt, durchgeführt wird und die folgenden Schritte umfasst:
- Überwachen (102) eines Pufferstands an einem Puffer, der Daten vom Senderknoten empfängt;
- wobei das Verfahren, wenn der Pufferstand eine Schwelle erreicht (104), ferner umfasst:
∘ Übertragen (108) mindestens einer Nachricht mit Informationen, die eine Länge von Zeit einer Medium-Access-Control-,MAC-, Flusssteuerung angeben, über die eCPRI-Schnittstelle an einen Senderknoten, um dadurch anzugeben, dass eine Dauerverkapselung von eCPRI-Paketen am Senderknoten pausiert werden soll;
∘ Übertragen (114) mindestens eines MAC-Flusssteuerungsrahmens mit einer Verzögerung, die ab dem Übertragen der mindestens einen über die eCPRI-Schnittstelle gesendeten Nachricht gemessen wird, an den Senderknoten, wobei die Verzögerung auf einer Zeit basiert, die am Senderknoten (502) benötigt wird, um die mindestens eine über die eCPRI-Schnittstelle gesendete Nachricht zu verarbeiten.

2. Verfahren nach Anspruch 1, wobei das Verfahren, wenn die MAC-Flusssteuerung eine prioritätsbasierte Flusssteuerung, PFC, ist, ein Bestimmen (106) einer Länge von Zeit der MAC-Flusssteuerung umfasst und der Vorgang des Übertragens über die eCPRI-Schnittstelle ein Übertragen der einen Nachricht mit Informationen umfasst, die eine Länge von Zeit der MAC-Flusssteuerung für mindestens eine Priorität angeben, wobei die Nachricht einen Wert umfasst, der eine Pausenzeitperiode angibt, die für die mindestens eine Priorität angefordert wird, und der Vorgang des Übertragens des mindestens einen MAC-Flusssteuerungsrahmens ein Übertragen eines PFC-PAUSE-Rahmens umfasst.

3. Verfahren nach Anspruch 1 oder 2, wobei die Informationen, die eine Länge von Zeit der MAC-Flusssteuerung angeben, umfassen:
- einen Prioritätsaktivierungsvektor (302) zum Angeben, ob MAC-Flusssteuerung auf spezifischen Prioritätsstufen einer Mehrzahl von Prioritätsstufen aktiviert werden sollte; und
- einen Zeitvektor (304), der eine Mehrzahl von Zeitwerten umfasst, die der Mehrzahl von Prioritätsstufen entspricht, wobei eine Kombination des Prioritätsaktivierungsvektorwerts für eine spezifische Prioritätsstufe und eines entsprechenden Zeitwerts für dieselbe Prioritätsstufe angibt, ob und für wie lange MAC-Flusssteuerung auf dieser spezifischen Prioritätsstufe aktiviert werden wird.

4. Verfahren nach einem der vorhergehenden Ansprüche, wobei die mindestens eine Nachricht mit Informationen, die eine Länge von Zeit der MAC-Flusssteuerung angeben, eine eCPRI-Nachricht Typ Nr. 5 *One-Way Delay Measurement* umfasst, die eine Aktion Typ 0x06 übermittelt, wobei die Aktion Typ 0x06 die Informationen umfasst, die eine Länge von Zeit der MAC-Flusssteuerung angeben (108, 108-1).

5. Verfahren zur Verwaltung von Datenpaketverzögerung in einem Kommunikationsnetzwerk, das einen Senderknoten über eine Common-Public-Radio-Interface-,eCPRI-, Schnittstelle mit einem Empfängerknoten verbindet, wobei das Verfahren an dem Senderknoten, der Datenpakete an den Empfängerknoten überträgt, durchgeführt wird und die folgenden Schritte umfasst:
- Empfangen (602) mindestens einer Nachricht mit Informationen, die eine Länge von Zeit einer Medium-Access-Control-,MAC-,Flusssteuerung angeben, über die eCPRI-Schnittstelle vom Empfängerknoten, um dadurch anzugeben, dass eine Dauerverkapselung von eCPRI-Paketen am Senderknoten pausiert werden soll;
- Pausieren (604) der Verkapselung von eCPRI-Paketen in Reaktion auf den Empfang einer ersten der mindestens einen Nachricht mit Informationen, die eine Länge von Zeit einer MAC-Flusssteuerung angeben;
- Empfangen (606) mindestens eines MAC-Flusssteuerungsrahmens;
- Pausieren (608) der Übertragung von Verkehr über eine Transportschnittstelle an den Empfängerknoten in Reaktion auf den Empfang eines ersten des mindestens einen MAC-Flusssteuerungsrahmens.

6. Verfahren nach Anspruch 5, wobei, wenn die MAC-Flusssteuerung eine prioritätsbasierte Flusssteuerung, PFC, ist, der Vorgang des Empfangens der mindestens einen Nachricht mit Informationen, die eine Länge von Zeit der MAC-Flusssteuerung angeben, ein Empfangen der einen Nachricht mit Informationen, die eine Länge von Zeit der MAC-Flusssteuerung für mindestens eine Priorität angeben, über die eCPRI-Schnittstelle umfasst, wobei die Nachricht einen Wert umfasst, der eine Pausenzeitperiode angibt, die für die mindestens eine Priorität angefordert wird.

7. Verfahren nach Anspruch 5 oder 6, wobei die Informationen, die eine Länge von Zeit der MAC-Flusssteuerung angeben, umfassen:
- einen Prioritätsaktivierungsvektor (302) zum Angeben, ob MAC-Flusssteuerung auf spezifischen Prioritätsstufen einer Mehrzahl von Prioritätsstufen aktiviert werden sollte; und
- einen Zeitvektor (304), der eine Mehrzahl von Zeitwerten umfasst, die der Mehrzahl von Prioritätsstufen entspricht, wobei eine Kombination des Prioritätsaktivierungsvektorwerts für eine spezifische Prioritätsstufe und eines entsprechenden Zeitwerts für dieselbe Prioritätsstufe angibt, ob und für wie lange MAC-Flusssteuerung auf dieser spezifischen Prioritätsstufe aktiviert werden wird.

8. Empfängerknoten (504) zur Verwendung in einem Kommunikationsnetzwerk, wobei der Empfängerknoten (504) einen Puffer (906) und eine physische Schnittstelle (910) zum Verbinden des Empfängerknotens (504) über eine Common-Public-Radio-Interface-,eCPRI-, Schnittstelle mit einem Senderknoten umfasst, wobei der Empfängerknoten (504) ferner eine Verarbeitungsschaltungsanordnung (902) und einen Speicher (904) umfasst, wobei der Speicher (904) Anweisungen enthält, die von der Verarbeitungsschaltungsanordnung (902) ausgeführt werden können, sodass der Empfängerknoten (504) ausgelegt ist zum:
- Überwachen eines Pufferstands an einem Puffer, der Daten vom Senderknoten empfängt;
- wobei der Empfängerknoten, wenn der Pufferstand eine Schwelle erreicht, ausgelegt ist zum:
∘ Übertragen mindestens einer Nachricht mit Informationen, die eine Länge von Zeit einer Medium-Access-Control-,MAC-,Flusssteuerung angeben, über die eCPRI-Schnittstelle an einen Senderknoten, um dadurch anzugeben, dass eine Dauerverkapselung von eCPRI-Paketen am Senderknoten pausiert werden soll;
∘ Übertragen mindestens eines MAC-Flusssteuerungsrahmen mit einer Verzögerung, die ab dem Übertragen der mindestens einen über die eCPRI-Schnittstelle gesendeten Nachricht gemessen wird, an den Senderknoten, wobei die Verzögerung auf einer Zeit basiert, die am Senderknoten (502) benötigt wird, um die mindestens eine über die eCPRI-Schnittstelle gesendete Nachricht zu verarbeiten.

9. Empfängerknoten (504) nach Anspruch 8, wobei der Empfängerknoten so ausgelegt ist, dass er, wenn die MAC-Flusssteuerung eine prioritätsbasierte Flusssteuerung, PFC, ist, eine Länge von Zeit der MAC-Flusssteuerung bestimmt und die eine Nachricht mit Informationen, die eine Länge von Zeit der MAC-Flusssteuerung für mindestens eine Priorität angeben, über die eCPRI-Schnittstelle überträgt, wobei die Nachricht einen Wert umfasst, der eine Pausenzeitperiode angibt, die für die mindestens eine Priorität angefordert wird, und ferner so ausgelegt ist, dass er einen PFC-PAUSE-Rahmen überträgt.

10. Empfängerknoten (504) nach Anspruch 8, wobei der Empfängerknoten so ausgelegt ist, dass er, wenn die MAC-Flusssteuerung eine PAUSE-Flusssteuerung ist, eine Länge von Zeit der MAC-Flusssteuerung bestimmt und die eine Nachricht mit Informationen, die eine Länge von Zeit der MAC-Flusssteuerung für mindestens eine Priorität angeben, über die eCPRI-Schnittstelle überträgt und mindestens einen PAUSE-Rahmen überträgt.

11. Senderknoten (502) zur Verwendung in einem Kommunikationsnetzwerk, wobei der Senderknoten (502) eine physische Schnittstelle (1010) zum Verbinden des Senderknotens (502) über eine Common-Public-Radio-Interface-,eCPRI-,Schnittstelle mit einem Empfängerknoten umfasst, wobei der Senderknoten (502) ferner eine Verarbeitungsschaltungsanordnung (1002) und einen Speicher (1004) umfasst, wobei der Speicher (1004) Anweisungen enthält, die von der Verarbeitungsschaltungsanordnung (1002) ausgeführt werden können, sodass der Senderknoten (502) ausgelegt ist zum:
- Empfangen mindestens einer Nachricht mit Informationen, die eine Länge von Zeit einer Medium-Access-Control-,MAC-,Flusssteuerung angeben, über die eCPRI-Schnittstelle vom Empfängerknoten, um dadurch anzugeben, dass eine Dauerverkapselung von eCPRI-Paketen am Senderknoten pausiert werden soll;
- Pausieren der Verkapselung von eCPRI-Paketen in Reaktion auf den Empfang einer ersten der mindestens einen Nachricht mit Informationen, die eine Länge von Zeit einer MAC-Flusssteuerung angeben;
- Empfangen mindestens eines MAC-Flusssteuerungsrahmens;
- Pausieren der Übertragung von Verkehr über eine Transportschnittstelle an den Empfängerknoten in Reaktion auf den Empfang eines ersten des mindestens einen MAC-Flusssteuerungsrahmens.

12. Senderknoten (502) nach Anspruch 11, wobei der Senderknoten so ausgelegt ist, dass er, wenn die MAC-Flusssteuerung eine prioritätsbasierte Flusssteuerung, PFC, ist, die eine Nachricht mit Informationen, die eine Länge von Zeit der MAC-Flusssteuerung für mindestens eine Priorität angeben, über die eCPRI-Schnittstelle empfängt, wobei die Nachricht einen Wert umfasst, der eine Pausenzeitperiode angibt, die für die mindestens eine Priorität angefordert wird.

13. Senderknoten (502) nach Anspruch 11 oder 12, wobei die Informationen, die eine Länge von Zeit der MAC-Flusssteuerung angeben, umfassen:
- einen Prioritätsaktivierungsvektor zum Angeben, ob MAC-Flusssteuerung auf spezifischen Prioritätsstufen einer Mehrzahl von Prioritätsstufen aktiviert werden sollte; und
- einen Zeitvektor, der eine Mehrzahl von Zeitwerten umfasst, die der Mehrzahl von Prioritätsstufen entspricht, wobei eine Kombination des Prioritätsaktivierungsvektorwerts für eine spezifische Prioritätsstufe und eines entsprechenden Zeitwerts für dieselbe Prioritätsstufe angibt, ob und für wie lange MAC-Flusssteuerung auf dieser spezifischen Prioritätsstufe aktiviert werden wird.

## Revendications

1. Procédé de gestion de retard de paquets de données dans un réseau de communication connectant un noeud émetteur sur une interface d'interface radio publique commune, eCPRI, à un noeud récepteur, le procédé étant réalisé au niveau du noeud récepteur recevant des paquets de données depuis le noeud émetteur et comprenant les étapes suivantes :
- la surveillance (102) d'un niveau de mémoire tampon au niveau d'une mémoire tampon recevant des données depuis le noeud émetteur ;
- lorsque le niveau de mémoire tampon atteint un seuil (104), le procédé comprend en outre :
∘ la transmission (108), au noeud émetteur sur l'interface eCPRI, d'au moins un message comprenant des informations indicatives d'une durée d'une commande de débit de commande d'accès au support, MAC, en indiquant de ce fait une durée de pause d'une encapsulation de paquets eCPRI au niveau du noeud émetteur ;
∘ la transmission (114) d'au moins une trame de commande de débit MAC au noeud émetteur avec un retard mesuré à partir de la transmission de l'au moins un message envoyé sur l'interface eCPRI, dans lequel le retard est basé sur le temps qu'il faut au noeud émetteur (502) pour traiter l'au moins un message envoyé sur l'interface eCPRI.

2. Procédé selon la revendication 1, dans lequel, si la commande de débit MAC est une commande de débit basée sur une priorité, PFC, le procédé comprend la détermination (106) d'une durée de la commande de débit MAC et l'opération de transmission sur l'interface eCPRI comprend la transmission d'un dit message comprenant des informations indicatives d'une durée de la commande de débit MAC pour au moins une priorité, dans lequel ledit message comprend une valeur indicative d'une période de temps de pause demandée pour ladite au moins une priorité et l'opération de transmission de l'au moins une trame de commande de débit MAC comprend la transmission d'une trame PFC-PAUSE.

3. Procédé selon la revendication 1 ou 2, dans lequel les informations indicatives d'une durée de la commande de débit MAC comprennent :
- un vecteur de priorité d'activation (302) pour indiquer si une commande de débit MAC doit être activée à des niveaux de priorité spécifiques d'une pluralité de niveaux de priorité ; et
- un vecteur de temps (304) comprenant une pluralité de valeurs de temps correspondant à la pluralité de niveaux de priorité, dans lequel une combinaison de la valeur de vecteur de priorité d'activation pour un niveau de priorité spécifique et d'une valeur de temps correspondante pour le même niveau de priorité indique si et pendant combien de temps une commande de débit MAC doit être activée à ce niveau de priorité spécifique.

4. Procédé selon l'une quelconque des revendications précédentes, dans lequel l'au moins un message comprenant des informations indicatives d'une durée de la commande de débit MAC comprend un type de message eCPRI #5 *One-Way Delay Measurement* portant un type d'action 0x06, dans lequel ledit type d'action 0x06 comprend les informations indicatives de la durée de la commande de débit MAC (108, 108-1).

5. Procédé de gestion de retard de paquets de données dans un réseau de communication connectant un noeud émetteur sur une interface d'interface radio publique commune, eCPRI, à un noeud récepteur, le procédé étant réalisé au niveau du noeud émetteur transmettant des paquets de données au noeud récepteur et comprenant les étapes suivantes :
- la transmission (602), depuis le noeud récepteur sur l'interface eCPRI, d'au moins un message comprenant des informations indicatives d'une durée d'une commande de débit de commande d'accès au support, MAC, en indiquant de ce fait une durée de pause d'une encapsulation de paquets eCPRI au niveau du noeud émetteur ;
- la pause (604) d'une encapsulation de paquets eCPRI en réponse à la réception d'un premier dudit au moins un message comprenant des informations indicatives d'une durée d'une commande de débit MAC ;
- la réception (606) d'au moins une trame de commande de débit MAC ;
- la pause (608) d'une transmission de trafic sur une interface de transport au noeud récepteur en réponse à la réception d'une première de ladite au moins une trame de commande de débit MAC.

6. Procédé selon la revendication 5, dans lequel, si la commande de débit MAC est une commande de débit basée sur une priorité, PFC, l'opération de la réception de l'au moins un message comprenant des informations indicatives d'une durée de la commande de débit MAC comprend la réception, sur l'interface eCPRI, d'un dit message comprenant des informations indicatives d'une durée de la commande de débit MAC pour au moins une priorité, dans lequel ledit message comprend une valeur indicative d'une période de temps de pause demandée pour ladite au moins une priorité.

7. Procédé selon la revendication 5 ou 6, dans lequel les informations indicatives d'une durée de la commande de débit MAC comprennent :
- un vecteur de priorité d'activation (302) pour indiquer si une commande de débit MAC doit être activée à des niveaux de priorité spécifiques d'une pluralité de niveaux de priorité ; et
- un vecteur de temps (304) comprenant une pluralité de valeurs de temps correspondant à la pluralité de niveaux de priorité, dans lequel une combinaison de la valeur de vecteur de priorité d'activation pour un niveau de priorité spécifique et d'une valeur de temps correspondante pour le même niveau de priorité indique si et pendant combien de temps une commande de débit MAC doit être activée à ce niveau de priorité spécifique.

8. Noeud récepteur (504) destiné à être utilisé dans un réseau de communication, le noeud récepteur (504) comprenant une mémoire tampon (906) et une interface physique (910) pour connecter le noeud récepteur (504) à un noeud émetteur sur une interface d'interface radio publique commune, eCPRI, le noeud récepteur (504) comprenant en outre une circuiterie de traitement (902) et une mémoire (904), la mémoire (904) contenant des instructions exécutables par la circuiterie de traitement (902) de sorte que le noeud récepteur (504) soit fonctionnel pour :
- surveiller un niveau de mémoire tampon au niveau d'une mémoire tampon recevant des données depuis le noeud émetteur ;
- lorsque le niveau de mémoire tampon atteint un seuil, le noeud récepteur est fonctionnel pour :
∘ transmettre, au noeud émetteur sur l'interface eCPRI, au moins un message comprenant des informations indicatives d'une durée d'une commande de débit de commande d'accès au support, MAC, en indiquant de ce fait une durée de pause d'une encapsulation de paquets eCPRI au niveau du noeud émetteur ;
∘ transmettre au moins une trame de commande de débit MAC au noeud émetteur avec un retard mesuré à partir de la transmission de l'au moins un message envoyé sur l'interface eCPRI, dans lequel le retard est basé sur le temps qu'il faut au noeud émetteur (502) pour traiter l'au moins un message envoyé sur l'interface eCPRI.

9. Noeud récepteur (504) selon la revendication 8, dans lequel, si la commande de débit MAC est une commande de débit basée sur une priorité, PFC, le noeud récepteur est fonctionnel pour déterminer une durée de la commande de débit MAC et transmettre, sur l'interface eCPRI, un dit message comprenant des informations indicatives d'une durée de la commande de débit MAC pour au moins une priorité, dans lequel ledit message comprend une valeur indicative d'une période de temps de pause demandée pour ladite au moins une priorité et en outre fonctionnel pour transmettre une trame PFC-PAUSE.

10. Noeud récepteur (504) selon la revendication 8, dans lequel, si la commande de débit MAC est une commande de débit PAUSE, le noeud récepteur est fonctionnel pour déterminer une durée de la commande de débit MAC et pour transmettre, sur l'interface eCPRI, un dit message comprenant des informations indicatives de la durée de la commande de débit MAC et pour transmettre au moins une trame PAUSE.

11. Noeud émetteur (502) destiné à être utilisé dans un réseau de communication, le noeud émetteur (502) comprenant une interface physique (1010) pour connecter le noeud émetteur (502) à un noeud récepteur sur une interface d'interface radio publique commune, eCPRI, le noeud émetteur (502) comprenant en outre une circuiterie de traitement (1002) et une mémoire (1004), la mémoire (1004) contenant des instructions exécutables par la circuiterie de traitement (1002) de sorte que le noeud émetteur (502) soit fonctionnel pour :
- recevoir, depuis le noeud récepteur sur l'interface eCPRI, au moins un message comprenant des informations indicatives d'une durée d'une commande de débit de commande d'accès au support, MAC, en indiquant de ce fait une durée de pause d'une encapsulation de paquets eCPRI au niveau du noeud émetteur ;
- mettre en pause une encapsulation de paquets eCPRI en réponse à la réception d'un premier dudit au moins un message comprenant des informations indicatives d'une durée d'une commande de débit MAC ;
- recevoir au moins une trame de commande de débit MAC ;
- mettre en pause une transmission de trafic sur une interface de transport au noeud récepteur en réponse à la réception d'une première de ladite au moins une trame de commande de débit MAC.

12. Noeud émetteur (502) selon la revendication 11, dans lequel, si la commande de débit MAC est une commande de débit basée sur une priorité, PFC, le noeud émetteur est fonctionnel pour recevoir, sur l'interface eCPRI, un dit message comprenant des informations indicatives d'une durée de la commande de débit MAC pour au moins une priorité, dans lequel ledit message comprend une valeur indicative d'une période de temps de pause demandée pour ladite au moins une priorité.

13. Noeud émetteur (502) selon la revendication 11 ou 12, dans lequel les informations indicatives d'une durée de la commande de débit MAC comprennent :
- un vecteur de priorité d'activation pour indiquer si une commande de débit MAC doit être activée à des niveaux de priorité spécifiques d'une pluralité de niveaux de priorité ; et
- un vecteur de temps comprenant une pluralité de valeurs de temps correspondant à la pluralité de niveaux de priorité, dans lequel une combinaison de la valeur de vecteur de priorité d'activation pour un niveau de priorité spécifique et d'une valeur de temps correspondante pour le même niveau de priorité indique si et pendant combien de temps une commande de débit MAC doit être activée à ce niveau de priorité spécifique.
